# EUROPEAN PATENT SPECIFICATION

(11) **EP 0 737 140 B1**
(45) Date of publication and mention of the grant of the patent: **19.12.2001**
(21) Application number: 95938951.1
(22) Date of filing: 31.10.1995
(51) Int. Cl.: B60R 21/16, D03D 15/02

(54) **COATED FABRIC FOR USE WITH NONAZIDE GAS GENERANTS**
BESCHICHTETES GEWEBE ZUR VERWENDUNG MIT AZIDFREIEN GASERZEUGENDEN ZUSAMMENSETZUNGEN
TEXTILE MUNI D'UN REVETEMENT UTILISE EN PRESENCE DE COMPOSITIONS GENERATRICES DE GAZ NON AZIDES

(30) Priority: 31.10.1994 US 331674; 31.10.1994 US 331934
(43) Date of publication of application: 16.10.1996
(73) Proprietor: AUTOMOTIVE SYSTEMS LABORATORY INC., Farmington Hills Michigan 48331 (US)
(72) Inventor: KHANDHADIA, Paresh, S., Troy, MI 48098 (US); ZELENAK, Daniel, G., Orion Township, MI 48362 (US)
(74) Representative: Woods, Geoffrey Corlett
(86) International application number: US9513946
(87) International publication number: WO9613405

(56) References cited:
- GB-A- 2 225 291
- JP-A- 5 016 752
- US-A- 4 948 439
- US-A- 5 009 872
- US-A- 5 160 163
- US-A- 5 186 903

## Description

The present invention relates generally to inflatable occupant safety restraints in motor vehicles, and more particularly to reducing the toxicity of effluent gases produced by nonazide gas generating compositions.

Inflatable occupant restraint devices for motor vehicles have been under development worldwide for many years, including the development of gas generating compositions for inflating such occupant restraints. Because the inflating gases produced by the gas generants must meet strict toxicity requirements, most, if not all, gas generants now in use are based on alkali or alkaline earth metal azides, particularly sodium azide. When reacted with an oxidizing agent, sodium azide forms a relatively nontoxic gas consisting primarily of nitrogen.

US-A-5160163 refers to an air bag with azide gas generating composition whereby CO is adsorbed or dissociated by coating the inner surface of the bag with active carbon or mixtures of manganese, copper, cobalt and silver oxides.

However, azide-based gas generants are inherently volatile to handle and entail relatively high risk in manufacture and disposal. More specifically, whereas the inflating. gases produced by azide-based gas generants are relatively nontoxic, the metal **azides** themselves are conversely highly toxic, thereby resulting in extra expense and risk in gas generant manufacture, storage, and disposal. In addition to direct contamination of the environment, metal **azides** also readily react with acids and heavy metals to form extremely sensitive compounds that may spontaneously ignite or detonate.

In contradistinction, nonazide gas generants, such as those disclosed in U.S. Patent No. 5,139,588 to Poole, typically comprise a nonazide fuel selected from the group of tetrazole compounds and metal salts thereof, and provide significant advantages over azide-based gas generants with respect to toxicity related hazards during manufacture and disposal. Moreover, most nonazide gas generant compositions typically supply a higher yield of gas (moles of gas per gram of gas generant) than conventional azide-based occupant restraint gas generants.

However, nonazide gas generants heretofore known and used produce high levels of toxic substances upon combustion. The most difficult toxic gases to control are the various oxides of nitrogen (NO_{X}) and carbon monoxide (CO).

Reduction of the level of toxic NO_{X} and CO upon combustion of nonazide gas generants has proven to be a difficult problem. For instance, manipulation of the oxidizer/fuel ratio only reduces either the NO_{X} or CO. More specifically, increasing the ratio of oxidizer to fuel minimizes the CO content upon combustion because the extra oxygen oxidizes the CO to carbon dioxide. Unfortunately, however, this approach results in increased amounts of NO_{X}. Alternatively, if the oxidizer/fuel ratio is lowered to eliminate excess oxygen and reduce the amount of NO_{X} produced, increased amounts of CO are produced.

One way to improve the toxicity of the combustion gases is to reduce the combustion temperature which would reduce the initial concentrations of both CO and NO_{X}. Although simple in theory, it is difficult in practice to reduce the combustion temperature and to also retain a sufficiently high gas generant burn rate for practical application in an inflatable vehicle occupant restraint system. The burn rate of the gas generant is important to insure that the inflator will operate readily and properly. As a general rule, the burn rate of the gas generant decreases as the combustion temperature decreases. By using less energetic fuels, specifically fuels which produce less heat upon combustion, the combustion temperature may be reduced but the gas generant burn rate is also reduced.

Therefore, a need still exists for reducing the toxicity of effluent gases produced by nonazide gas generants without compromising the gas generant burn rate.

Thus, the present invention provides a fabric for reducing the levels of toxic oxides of nitrogen and carbon monoxide in effluent gas produced by combustion of a nonazide fuel gas generating composition used to inflate a vehicle occupant restraint device, which fabric has, as a first coating, an alkaline composition which reduces the level of toxic oxide of nitrogen and, as a second coating, an oxidation catalyst which reduces the level of carbon monoxide. The alkaline composition may be, for example, one or more of magnesium carbonate, sodium carbonate, calcium carbonate, calcium hydroxide, magnesium hydroxide, potassium hydroxide, and sodium hydroxide. As the effluent gases flow into the alkaline coated fabric, the concentration of NOₓ is reduced therein.

The second fabric coating comprises at least one oxidation catalyst, for example, oxides of manganese, copper, cobalt, and silver, and HOPCALITE compounds. As the effluent gases flow into the oxidation catalyst coated fabric, the concentration of CO is reduced therein.

The two coatings may be applied to a singular fabric, or alternatively, to separate fabrics if desired. The invention also provides an air bag including fabric of the invention. In further accordance with the present invention, one or both coatings are applied to the air bag material itself. The invention further provides the use of the fabric of the invention for reduction of toxic oxides as defined above.

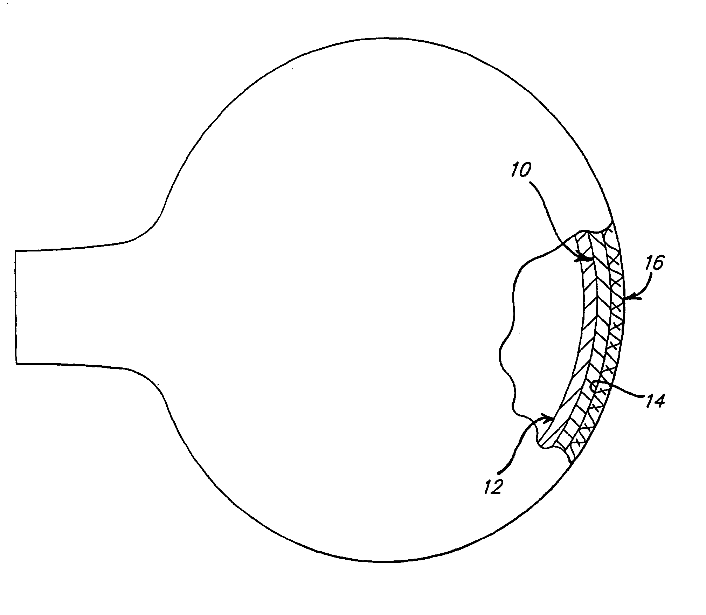

The figure is a diagrammatic illustration of an inflatable air bag used in a vehicle occupant restraint system showing a partial cross section of a coated fabric in accordance with the present invention.

In accordance with the present invention, a specially coated fabric is utilized to reduce the toxicity of combustion gases produced by nonazide gas generating compositions used to inflate vehicle occupant restraint systems, such as air bags. More specifically, the coatings are applied to the fabric in order to attenuate the concentrations of NOₓ and CO, which have heretofore been difficult to reduce without also undesirably decreasing the gas generant burn rate to insufficient levels.

In order to reduce the CO concentration present in effluent gases produced by the combustion of nonazide gas generants, a coating comprising one or more oxidation catalysts is applied to the fabric, in accordance with the present invention. By way of example, copper oxide, manganese dioxide, and particularly HOPCALITE compounds are oxidation catalysts that may be used in a fabric coating. HOPCALITE generally comprises mixtures of oxides of copper, cobalt, manganese and silver, and is typically formed by utilizing manganese dioxide and cupric oxide because of cost. Further,- surface modified HOPCALITE is also available, and is less susceptible to moisture, thereby facilitating the use of a wash coating application process, as described hereinbelow. The oxidation catalyst coating effects a conversion of toxic CO to carbon dioxide (CO₂) by catalyzing a reaction of CO with oxygen gas (O₂), which is also present in the effluent gases.

Nonazide gas generants often also produce unacceptable levels of NO_{X} upon combustion, for example nitrogen dioxide (NO₂), which is particularly toxic. In further accordance with the present invention, a coating comprising at least one alkaline material, for example, sodium carbonate (Na₂CO₃), magnesium carbonate (MgCO₃), calcium carbonate (CaCO₃), calcium hydroxide (Ca(OH)₂), magnesium hydroxide (Mg(OH)₂), potassium hydroxide (KOH), and sodium hydroxide (NaOH), is utilized to alleviate the excessive NO_{X} concentration produced by the combustion of the nonazide gas generant. Specifically, the alkaline coating reacts in an acid-base manner with NO₂. For example, Na₂CO₃ in the alkaline coating reacts with NO₂ and water (H₂O), which is also present in the effluent gases, to form sodium nitrate (NaNO₃), CO₂, and hydrogen gas (H₂). In many nonazide gas generating compositions both the NOₓ and CO concentrations are unacceptable, and both the oxidation catalyst coating and the alkaline coating are therefore desirable. It is noted that each coating is preferably applied to a singular fabric, but separate fabrics for each coating may alternatively be used, if desired.

In further accordance with the present invention, as shown in the figure (exaggerated in proportion for illustrative purposes), the oxidation catalyst coating 10 and the alkaline coating 12 are preferably applied to the inner surface 14 of the air bag material 16 itself. Incorporation of one or both coatings onto the air bag material itself is advantageous because of the peak "residence time" associated with the position of the bag during inflation, which may be as high as two or more seconds. Conversely, the "residence time" of placing a separate coated fabric near the gas generator may only be, for example, 60 milliseconds. Applying the coatings directly on the air bag material itself therefore facilitates the removal of NOₓ and CO because each coating has maximum time to operate by virtue of the peak "residence time."

The present invention is not limited by the types and variations of materials used as air bags. For example, the air bag may be formed from woven or nonwoven materials, including, but not limited to, polyethylene, polyester, and nylon. Further, the oxidation catalyst coating and the alkaline coating of the present invention may also be applied to porous uncoated bags, as well as to conventionally coated vented bags, which are already coated with other materials which enhance packing of the bag and weight reduction. The coatings of the present invention may also be applied to film type bag materials.

The present invention is not limited by the process of adhering each coating to the bag. The coatings may be applied, for example, by dip-coating, immersion, spraying, or a wash coating wherein surface modified HOPCALITE, for example, may be utilized as the oxidation catalyst. By way of example, 100 milligrams of the HOPCALITE oxidation catalyst for a driver's side air bag, and 200 milligrams of the HOPCALITE oxidation catalyst for a passenger's side air bag, is ground to a predetermined particle size, then suspended in a wash coat formulation, and then applied to the surface of a nonwoven polyester. The relative amounts of alkaline material used in the alkaline coating are similar.

## Claims

1. Fabric for reducing the levels of toxic oxides of nitrogen and carbon monoxide in effluent gas produced by combustion of a nonazide fuel gas generating composition used to inflate a vehicle occupant restraint device, which fabric has, as a first coating, an alkaline composition which reduces the level of toxic oxide of nitrogen and, as a second coating, an oxidation catalyst which reduces the level of carbon monoxide.

2. Fabric according to claim 1 wherein the alkaline composition is selected from sodium carbonate, magnesium carbonater calcium carbonate, calcium hydroxide, magnesium hydroxide, potassium hydroxide and sodium hydroxide.

3. Fabric according to claim 1 or 2 wherein the oxidation catalyst is selected from the oxides of copper, cobalt, manganese and silver, and HOPCALITE compounds.

4. Fabric according to any one of claims 1 to 3 in the form of material forming an air bag.

5. Fabric according to any preceding claim, wherein the first and second coatings are applied to a singular fabric.

6. Fabric according to any of claims 1 to 4, wherein the first and second coatings are applied to separate fabrics.

7. A vehicle occupant restraint air bag including fabric according to any preceding claim.

8. An air bag according to claim 7, wherein the fabric comprises the air bag material.

9. Use of fabric according to any of claims 1 to 6 or of an air bag according to claim 7 or 8 for reducing the toxicity of effluent gas comprising toxic oxide of nitrogen and carbon monoxide, which effluent gas is produced by combustion of a nonazide fuel gas generating composition used to inflate a vehicle occupant restraint system.

## Patentansprüche

1. Gewebe zur Verringerung des Gehalts an toxischen Stickstoff-oxiden und Kohlenmonoxid in ausströmendem Gas, das durch Verbrennung einer ein azidfreies Treibgas erzeugenden Zusammensetzung gebildet worden ist und das angewandt wird, um eine Rückhaltevorrichtung für Kraftfahrzeuginsassen aufzublasen, wobei das Gewebe als einen ersten Überzug eine alkalische Zusammensetzung aufweist, die den Gehalt an toxischen Stickstoff-Oxiden verringert, und als zweiten Überzug einen Oxidationskatalysator, der den Gehalt an Kohlenmonoxid verringert.

2. Gewebe nach Anspruch 1, wobei die alkalische Zusammensetzung ausgewählt ist aus Natriumcarbonat, Magnesiumcarbonat, Calciumcarbonat, Calciumhydroxid, Magnesiumhydroxid, Kaliumhydroxid und Natriumhydroxid.

3. Gewebe nach Anspruch 1 oder 2, wobei der Oxidationskatalysator ausgewählt ist aus den Oxiden von Kupfer, Cobalt, Mangan und Silber, sowie HOPCALITE-Verbindungen.

4. Gewebe nach einem der Ansprüche 1 bis 3, in Form eines Materials, das einen Airbag bildet.

5. Gewebe nach einem der vorangehenden Ansprüche, wobei der erste und zweite Überzug auf eine einzige Stoffschicht aufgebracht sind.

6. Gewebe nach einem der Ansprüche 1 bis 4, wobei der erste und zweite Überzug auf getrennte Stoffschichten aufgebracht sind.

7. Airbag für Kraftfahrzeuginsassen, umfassend ein Gewebe nach einem der vorangehenden Ansprüche.

8. Airbag nach Anspruch 7, wobei das Gewebe das Airbagmaterial darstellt.

9. Verwendung des Gewebes nach einem der Ansprüche 1 bis 6 oder eines Airbags nach Anspruch 7 oder 8 zur Verringerung der Toxizität von ausströmendem Gas, das toxische Stickstoff-oxide und Kohlenmonoxid enthält, wobei das ausströmende Gas gebildet worden ist durch Verbrennung einer ein azidfreies Treibgas erzeugenden Zusammensetzung und das verwendet wird, um ein Rückhaltesystem für Kraftfahrzeuginsassen aufzublasen.

## Revendications

1. Tissu pour diminuer la teneur en oxydes d'azote et monoxyde de carbone toxiques des gaz produits par la combustion d'une composition combustible exempte d'azoture, produisant des gaz, utilisée pour gonfler un dispositif de maintien de l'occupant d'un véhicule, tissu qui porte, comme premier revêtement, une composition alcaline qui diminue la teneur en oxyde d'azote toxiques et, comme second revêtement, un catalyseur d'oxydation qui diminue la teneur en monoxyde de carbone.

2. Tissu selon la revendication 1, pour lequel la composition alcaline est choisie parmi le carbonate de sodium, le carbonate de magnésium, le carbonate de calcium, l'hydroxyde de calcium, l'hydroxyde de magnésium, l'hydroxyde de potassium et l'hydroxyde de sodium.

3. Tissu selon la revendication 1 ou 2, pour lequel le catalyseur d'oxydation est choisi parmi les oxydes de cuivre, de cobalt, de manganèse et d'argent, et les hopcalites.

4. Tissu selon l'une quelconque des revendications 1 à 3, qui est sous la forme d'un matériau formant un coussin d'air.

5. Tissu selon l'une quelconque des revendications précédentes, pour lequel le premier revêtement et le second revêtement sont appliqués sur un tissu unique.

6. Tissu selon l'une quelconque des revendications 1 à 4, pour lequel le premier revêtement et le second revêtement sont appliqués sur des tissus séparés.

7. Coussin d'air pour le maintien de l'occupant d'un véhicule, qui comprend un tissu selon l'une quelconque des revendications précédentes.

8. Coussin d'air selon la revendication 7, pour lequel le tissu constitue le matériau du coussin d'air.

9. Utilisation d'un tissu selon l'une quelconque des revendications 1 à 6 ou d'un coussin d'air selon la revendication 7 ou 8 pour diminuer la toxicité des gaz libérés, comprenant des oxydes d'azote et du monoxyde de carbone toxiques, qui sont produits par la combustion d'une composition combustible exempte d'azoture, produisant des gaz, utilisée pour gonfler un système de maintien de l'occupant d'un véhicule.
